# EUROPEAN PATENT SPECIFICATION

(11) **EP 3 150 850 B1**
(45) Date of publication and mention of the grant of the patent: **08.12.2021**
(21) Application number: 15382476.8
(22) Date of filing: 30.09.2015
(51) Int. Cl.: F03D 80/40, F03D 7/02

(54) **DE-ICING BLADES OF A WIND TURBINE**
ENTEISUNG VON BLÄTTERN EINER WINDTURBINE
DÉGIVRAGE D'AUBES D'UNE TURBINE ÉOLIENNE

(43) Date of publication of application: 05.04.2017
(73) Proprietor: GE Renewable Technologies Wind B.V., 4817 PA Breda (NL)
(72) Inventor: NUALART, Pau, 08401 GRANOLLERS (ES); ARMET UNZETA, Jordi, 08470 SANT CELONI (ES); CANAL VILA, Marc, 08037 BARCELONA (ES); FEIGL, Luca, 08006 BARCELONA (ES)
(74) Representative: de Rooij, Mathieu Julien

(56) References cited:
- DE-A1- 19 528 862
- US-A1- 2008 152 493
- US-A1- 2012 301 295

## Description

### BACKGROUND

Modern wind turbines are commonly used to supply electricity into the electrical grid. Wind turbines of this kind generally comprise a rotor with a plurality of blades. The rotor with the blades is set into rotation under the influence of the wind on the blades. The rotation of the rotor shaft drives the generator rotor either directly ("directly driven") or through the use of a gearbox.

Under certain atmospheric conditions ice may appear on wind turbine blades in which can affect their aerodynamic performance. The modified aerodynamic behavior of the blades can lead to inefficient operation of the wind turbine with a resulting power loss.

A common prior art strategy to solve the loss of efficiency caused by the ice on the wind turbine blades consists of de-icing the blades in order to eliminate the ice. Many different ways are known to carry out a de-icing process, such as blowing hot air inside the blades. The hot air comes into contact with the inner surface of the blades and thus heats up the blades. Alternatively, electrical resistance heaters may be integrated in the blades. Yet a further alternative is based on spraying the outer surface of the blades with a liquid.

The before described de-icing methods may imply high energy consumption. Additionally, the operation of the wind turbine can be interrupted for a relatively long time. Particularly, the de-icing based on blowing hot air can involve high energy consumption. In some cases, de-icing is done blade after blade. This is done so, because de-icing the plurality (i.e. typically three) blades at the same time would require too much electrical power. Of course, the downside of de-icing one blade at a time is that the operation of the wind turbine is interrupted for a longer time.

Ice detection is needed in order to determine when to operate a de-icing system. Many different types of sensors are known suitable for this purpose.

Such sensors may be provided on the blades or e.g. on the nacelle. Regardless of which type of sensor is used, no sensor is 100% reliable. This means that there may be false positives (the sensors indicate the presence of ice, while in reality there is no ice) and false negatives (the sensors do not indicate the presence of ice, while in reality there is ice on the blades). Also webcam based visual systems are known. These systems however are not useful in low visibility conditions.

Another detection method is based on evaluating the so called power curve performance. This method presupposes that a power loss is due to the ice and therefore stopping the wind turbine is required for a de-icing process. Such a detection method is not always effective when there is only little ice on the blades. The presence of ice may go undetected with the risk of ice flinging off of the blades. Also, this detection method cannot be used when in idling mode. Therefore, the system may not be used to decide a de-icing procedure before start-up of the wind turbine, for instance when a wind turbine has been stopped because of high wind speeds or low wind speeds. Finally, also measurement of the rotor Eigen modes can be used to detect ice on the blades. Nevertheless, in this case, a relatively large number of sensors and sophisticated data post-processing are needed to evaluate a change in dynamics, which can still result to be complicated.

US 2012/301295 A1 discloses a method of de-icing blades of a wind turbine.

In conclusion, regardless of which method or system is chosen, there is no guarantee that ice-conditions can always be correctly determined.

In examples of the present disclosure, at least some of the aforementioned problems are at least partially resolved.

### SUMMARY

In a first aspect, a method of de-icing blades of a wind turbine according to claim 1 is provided.

According to this aspect, a mass imbalance test is performed. If mass imbalance of the rotor is detected, it can be assumed that the mass imbalance is due to a difference in quantity of ice on the blades, i.e. there should be no ice on the first blade which has just been de-iced, but there is ice on the other blades. If this is the case, then the remaining blades are also de-iced.

If no mass imbalance is found, then it can be assumed that there is no ice on any one of the blades and the wind turbine can be started up. The blade that has been de-iced was most probably unnecessarily de-iced, but at least the same de-icing method was not performed for the other blades, which translates into less power consumption and increased wind turbine availability.

The implementation of methods according to this aspect enables not only energy and time savings on de-icing processes but also assures the efficiency of both de-icing and ice detection systems. Often, de-icing processes last several hours during which no power is generated by the wind turbine and moreover, a lot of energy is consumed by these processes. With methods according to the first aspect, de-icing processes may be shortened, reducing both wind turbine non-productive time and energy consumption. There is no completely reliable sensor available for determining the presence of ice so a wind turbine may be stopped by a false positive detection; methods according to this aspect herein described provide a way to check the accuracy of the finding or prediction of ice.

An example of a mass imbalance test in some implementations may comprise rotating the blades at a predetermined speed which may be controlled to be substantially constant, measuring a parameter that is directly or indirectly indicative of a rotor mass imbalance (such as e.g. lateral acceleration), and then comparing the measured parameter with a value of the same parameter for the same predefined speed in a condition wherein there is no ice on the blades.

In a second aspect, a wind turbine according to claim 8 is provided.

Additional objects, advantages and features of embodiments of the invention will become apparent to those skilled in the art upon examination of the description.

### BRIEF DESCRIPTION OF THE DRAWINGS

Non-limiting examples of the present disclosure will be described in the following, with reference to the appended drawings, in which:
Figure 1 illustrates a flow diagram of a method of de-icing the blades of a wind turbine;
Figure 2 schematically illustrates a wind turbine with blades in "inverted Y" position and indicates the lateral acceleration;
Figure 3 illustrates values of nacelle lateral (side-side) acceleration at different generator speeds for balanced and unbalanced rotors;
Figure 4 illustrates an example of a method for de-icing and to test mass imbalance; and
Figure 5 illustrates a further example of a method for de-icing and to test mass imbalance.

### DETAILED DESCRIPTION OF EXAMPLES

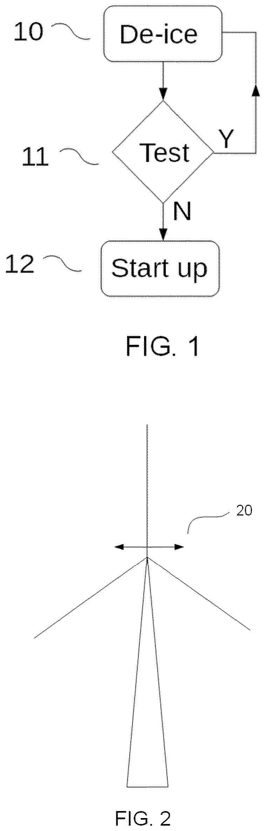

Figure 1 is an illustration of a flow diagram describing an example of a method of de-icing the blades of a wind turbine. The method comprises de-icing a blade and testing whether there is a mass imbalance in the rotor or not. In case a mass imbalance is detected the other blades of the rotor may be de-iced. Such de-icing may be done through any known method, e.g. blowing hot air inside the blades with a fan.

As illustrated in the example of figure 1 the first step may be a de-icing 10 of a single blade. When the blade is de-iced, a mass imbalance test 11 may be applied. Finally, and depending on the result of mass imbalance test 11, the other blades may be de-iced 10 or the wind turbine may be started up 12.

The hereinbefore mentioned mass imbalance test may be carried out in different ways. In a first example, the mass imbalance test is carried out by rotating the rotor at a predefined speed and measuring lateral oscillations. The lateral oscillations may be e.g. nacelle side-to-side oscillations 20, as shown in figure 2.

In a second example, the mass imbalance test is carried out by challenging the equilibrium of the rotor in a stand still position. These two examples will now be explained in more detail.

During normal operation of a wind turbine, some movements and accelerations are foreseen, such as frontal or lateral acceleration caused by the rotation of the blades. These movements are considered when designing a wind turbine. When lateral oscillations become higher than foreseen, this may be caused by an unexpected asymmetry of the blades, e.g. different masses for the different blades. Such different masses can be caused by e.g. ice on some of the blades, but not on all the blades.

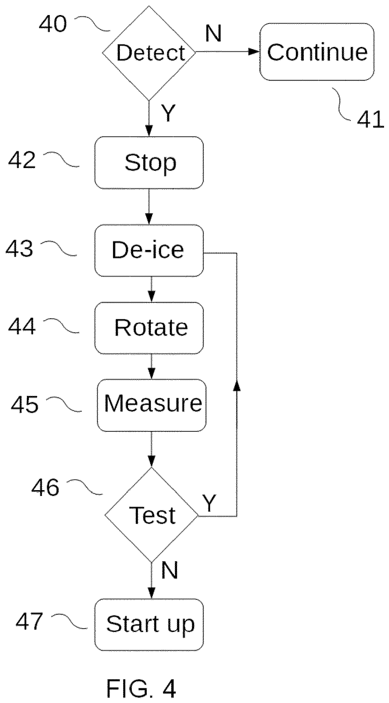

A first method for de-icing and a subsequent mass imbalance test is shown in the flow diagram of figure 4, which includes the specific steps of this example.

The method according to this example presupposes that the wind turbine is in operation when the possible presence of ice is detected.

The first step may be an ice detection 40. Any suitable type of sensor or system could be used. The ice detection system may include one or more optical strain sensors in the blades or on the nacelle. As explained earlier, the ice detection system could also be a system for analyzing the power curve. Yet another possibility is to measure temperature and humidity. Based on the combination of temperature and humidity, the probability of presence of ice can be determined.

When no ice is detected the wind turbine may continue operating 41. On the other hand, if ice is detected the wind turbine may be stopped 42 and a blade may be de-iced 43, as described in figure 1.

A detection of ice or an indication of use may automatically cause the wind turbine to stop. In other examples, there may be also the possibility of manually triggering the process i.e. a human operator may trigger the process locally after a visual inspection or remotely when e.g. ice formation is likely to happen even if the detection system has not yet triggered the process.

Then, the wind turbine may be rotated 44 at a secure speed for which theoretical lateral acceleration values are known. Such a predetermined or secure speed may be defined as a speed generally under nominal speed or generally a relatively low speed which permits measuring lateral oscillations without risking the structural integrity of the wind turbine.

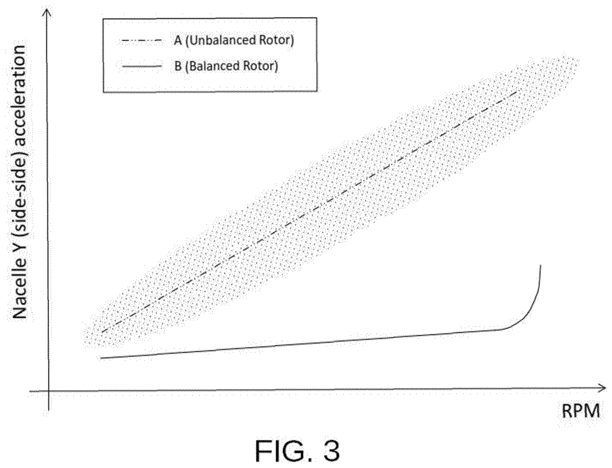

Indeed, an optimal wind speed for application of the method may be as low as possible to ensure both structural integrity and higher feasibility of employing the method (as higher wind speeds are less frequent) but enabling a sufficiently distinct behavior of the wind turbine, e.g. with regard to lateral oscillations, when compared to the same behavior observed without presence of rotor mass imbalance (see figure 3). If the rotor speed is too low, the small differences in wind turbine behavior (with and without rotor mass imbalance) and a relatively higher noise to signal ratio which could hinder application of the method or reduce its precision.

The next step may comprise measuring nacelle lateral acceleration 45, which is an indicator of unusual operation. Said lateral acceleration may be measured by a sensor, e.g. an accelerometer, placed preferably on the nacelle. An alternative method for measuring lateral oscillations may comprise measuring loads at the base of the tower. From these loads, lateral oscillations may be derived.

Afterwards, the obtained values of lateral acceleration measured under secure speed rotation may be compared with known values measured under same predefined speed conditions but in a condition wherein there is no ice on the blades. The aim of the comparison is to compare 46 if both values, the measured ones and the known ones, are similar or not. When the measured lateral acceleration reveals a similar value as the theoretical value for the same speed, it may be assumed there is no asymmetry in blades mass. In other words, there is no ice on any of the blades and the wind turbine may be started up 47 without the need for any further de-icing.

On the other hand, in case of dissimilar values, an asymmetry may be presumed. The asymmetry herein means that the de-iced blade has a different mass than the other blades. This thus indicates the presence of ice on the other blades. If this is the case, then at least one other blade may be de-iced 43 and then the mass imbalance test may be repeated, or all remaining blades may be de-iced directly. After de-icing of all the blades, the wind turbine operation may be resumed.

In connection with figure 4, figure 3 shows values of nacelle lateral acceleration values at different generator speeds for balanced and unbalanced rotor. The generator speed is directly linked with the rotor speed. In direct drive wind turbines, both speeds are the same. In the case of wind turbines having a drive train with a gearbox, the ratio between generator speed and rotor speed is known.

In the figure, the dashed line represents the values for an unbalanced rotor while the continuous line represents values for a balanced rotor.

It may be seen in figure 3, that when the rotor is balanced, e.g. there is ice present on all the blades or there is no ice on the blades, the acceleration values are similar. On the contrary, in a situation of two blades with ice, the values are clearly different due to the difference of the blades mass. Therefore this method may be an effective tool to be used after de-icing one of the blades as the values may be visibly distinct.

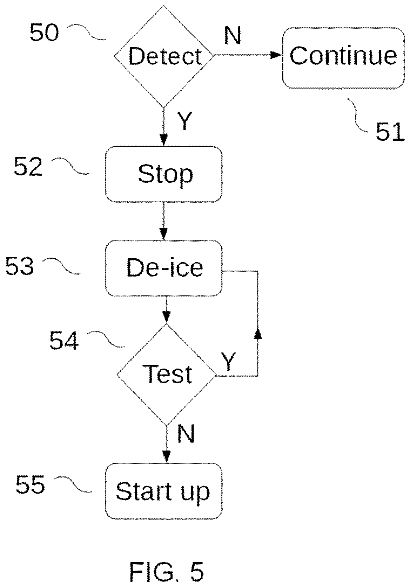

The flow diagram depicted in figure 5 schematically illustrates a second example of de-icing and a mass imbalance test. The mass imbalance test in this case may comprise allowing a free movement of the blades while challenging a possible unstable equilibrium to detect an imbalance in case of rotation.

In the example of the method of figure 5, again it is presupposed that the wind turbine is operating. As before, during operation, the possible presence of ice on the wind turbine blades 50 may be detected and therefore the wind turbine may be stopped 52. On the other hand, when no ice detection occurs, the wind turbine continues operating 51. When the wind turbine is stopped 52 the blades may be placed in any of the predetermined stopping positions and a blade may be de-iced 53.

Stopping a wind turbine may typically comprise slowing down the rotation of the rotor to a standstill and mechanically blocking the rotor in the predetermined position. Such a mechanical blocking may include the introduction of a pin into a plate with a plurality of holes. Each of the plurality of holes corresponds to one specific position of the blades. The mechanical blocking is used to avoid undesired rotation of the rotor under the influence of the wind. At the same time, blades maybe pitched to a vane position.

A specific method of de-icing may in some cases require the wind turbine to be stopped in a specific orientation. After interrupting the operation of the wind turbine, one of the blades may be de-iced.

Afterwards, the mechanical blocking may be released and the rotor may be let free to challenge the possible imbalance 54. Challenging the possible imbalance in this case may comprise setting the rotor in a very small rotation, or simply letting the wind impact the rotor (e.g. the blades may be rotated out of a vane position).

In the case that there is ice on the other blades, the mass imbalance will cause the rotor to rotate to an inverted Y-position, in which the lightest blade (i.e. the blade without ice) is in a position parallel to the tower pointing upwards.

Challenging the equilibrium may occur starting from any arbitrary rotor position. The only exception is a position of inverted Y in which the de-iced blade is already pointing upwards and rotor positions substantially close to the inverted Y rotor position, which would result in very limited rotor rotation when transitioning to the equilibrium position.

If there is no mass imbalance and all the blades have substantially the same mass. In this situation, there is no ice on any of the blades or only an insignificant amount of ice on the blades, and the de-icing of the first blade was in reality not necessary. In this case, the rotor will stay still and not rotate towards any specific position.

If a mass imbalance is found further blades may be de-iced 53 before starting up the wind turbine. Thus the wind turbine may be started up 55 without wasting time and energy in other unnecessary de-icing.

Both rotor imbalance tests described before could be partially aided by or relying solely on motorization of the rotor, i.e. making the rotor rotate by powering the drivetrain. In the case of a lateral acceleration-based imbalance test the motorization could be used to achieve or maintain a desired rotational speed. In the case of the other imbalance test the motorization could be used to achieve a desired rotor position.

In the above mentioned cases, the power required for motorization or a parameter measured during said motorization step could be used for determining if the rotor is balanced or unbalanced. Rotating a balanced rotor requires a substantially regular, stable power supply to the drivetrain. Rotating an unbalanced rotor on the other hand will require a power supply which varies in amplitude in a much greater range than a balanced one and which is greatly influenced by the ice mass present on each blade and relative azimuth position of the (non-iced) blades which have a normal mass and those which have additional ice mass. If the magnitude of the imbalance is above a certain threshold then it could be eventually be impossible to apply motorization as the required power or torque could exceed the capabilities of the electric and/or mechanical systems.

In the previous examples, operation of the wind turbine was presupposed. It will be clear however that the same or similar methods may be carried out when a wind turbine has been down for a period of time due to e.g. planned maintenance or because of high of low winds. In case of a sensor indicating the possible presence of ice, or as a precautionary measure in certain climates during certain times of the year, a single blade could be de-iced and a mass imbalance can be tested.

Although only a number of examples have been disclosed herein, other alternatives, modifications, uses and/or equivalents thereof are possible.

Thus, the scope of the present disclosure should not be limited by particular examples.

## Claims

1. A method of de-icing blades of a wind turbine after having stopped operation of the wind turbine, the wind turbine comprising a rotor comprising three blades; and wherein the method comprises:
de-icing (10, 43, 53) a single first blade of the three blades;
testing (11, 46, 54) whether there is a mass imbalance in the rotor after de-icing the single first blade; and
in case mass imbalance is detected, de-icing all the other blades of the rotor,
and in case mass imbalance is not detected, resuming operation (12, 47, 55) of the wind turbine without de-icing other blades of the rotor.

2. A method according to claim 1 further comprising, prior to the de-icing of the single first blade:
stopping the operation of the wind turbine when the possible presence of ice on the blades is detected.

3. A method according to claim 2, wherein stopping the operation is done automatically in response to a detection of possible presence of ice on the blades by one or more sensors.

4. A method according to claim 2, wherein stopping the operation is triggered by a manual command.

5. The method according to any of claims 1 - 4, wherein the testing whether there is a mass imbalance in the rotor comprises:
rotating the blades at a predefined speed;
measuring a parameter indicative of mass imbalance; and
comparing the measured parameter with a value of the parameter for the same predefined speed in a condition wherein there is no mass imbalance.

6. The method of claim 5, wherein the parameter is the lateral oscillation of the nacelle and/or the tower.

7. The method according to any of claims 1 - 6, wherein testing whether there is a mass imbalance in the rotor comprises positioning the rotor in standstill position and challenging the unstable equilibrium of the rotor.

8. A wind turbine comprising:
a rotor comprising three blades;
a nacelle;
a tower;
an ice detection system;
a de-icing system; and
a control system configured to perform the method according to any of claims 1 7.

9. The wind turbine of claim 8, furthermore comprising a system to determine lateral acceleration of the nacelle and/or the tower.

10. The wind turbine of claim 9, wherein the system to determine lateral acceleration comprises one or more accelerometers.

11. The wind turbine of any of claims 8 - 10, wherein the ice detection system comprises an ice detection sensor placed on the nacelle.

12. The wind turbine of claims 8 - 11, wherein the de-icing system comprises a fan for blowing air into the blades.

## Patentansprüche

1. Verfahren zum Enteisen von Blättern einer Windturbine, nachdem der Betrieb der Windturbine gestoppt wurde, wobei die Windturbine einen Rotor mit drei Blätter umfasst; und wobei das Verfahren umfasst:
Enteisung (10, 43, 53) einer einzelnen ersten der drei Blätter;
Prüfen (11, 46, 54), ob nach dem Enteisen des ersten Einzelblattes eine Massenunwucht im Rotor vorhanden ist; und
falls eine Massenunwucht festgestellt wird, Enteisung aller anderen Rotorblätter,
und falls keine Massenunwucht festgestellt wird, Wiederaufnahme des Betriebs (12, 47, 55) der Windkraftanlage ohne Enteisung der anderen Rotorblätter.

2. Verfahren nach Anspruch 1, bei dem vor der Enteisung des einzelnen ersten Blattes ein weiterer Schritt erfolgt:
Unterbrechung des Betriebs der Windkraftanlage, wenn das mögliche Vorhandensein von Eis auf den Blättern festgestellt wird.

3. Verfahren nach Anspruch 2, wobei der Betrieb automatisch gestoppt wird, wenn ein oder mehrere Sensoren das mögliche Vorhandensein von Eis auf den Blättern feststellen.

4. Verfahren nach Anspruch 2, wobei das Anhalten des Vorgangs durch einen manuellen Befehl ausgelöst wird.

5. Verfahren nach einem der Ansprüche 1 bis 4, wobei die Prüfung, ob eine Massenunwucht im Rotor vorliegt, umfasst:
die Blätter mit einer vordefinierten Geschwindigkeit drehen;
Messung eines Parameters, der auf ein Ungleichgewicht der Masse hinweist; und
Vergleichen des gemessenen Parameters mit einem Wert des Parameters für dieselbe vordefinierte Geschwindigkeit in einem Zustand, in dem keine Massenunwucht vorliegt.

6. Verfahren nach Anspruch 5, wobei der Parameter die seitliche Schwingung der Gondel und/oder des Turms ist.

7. Verfahren nach einem der Ansprüche 1 bis 6, wobei die Prüfung, ob eine Massenunwucht im Rotor vorliegt, die Positionierung des Rotors in der Stillstandsposition und die Prüfung des instabilen Gleichgewichts des Rotors umfasst.

8. Eine Windkraftanlage, bestehend aus:
einen Rotor mit drei Blätter;
eine Gondel;
einen Turm;
ein Eiserkennungssystem;
ein Enteisungssystem; und
ein Steuersystem, das zur Durchführung des Verfahrens nach einem der Ansprüche 1 bis 7 konfiguriert ist.

9. Windkraftanlage nach Anspruch 8, die außerdem ein System zur Bestimmung der Querbeschleunigung der Gondel und/oder des Turms umfasst.

10. Windkraftanlage nach Anspruch 9, wobei das System zur Bestimmung der Querbeschleunigung einen oder mehrere Beschleunigungsmesser umfasst.

11. Windkraftanlage nach einem der Ansprüche 8 bis 10, wobei das Eiserkennungssystem einen Eiserkennungssensor umfasst, der an der Gondel angebracht ist.

12. Windkraftanlage nach einem der Ansprüche 8 bis 11, wobei das Enteisungssystem ein Gebläse zum Einblasen von Luft in die Blätter umfasst.

## Revendications

1. Procédé de dégivrage des pales d'une éolienne après avoir arrêté le fonctionnement de l'éolienne, l'éolienne comprenant un rotor comprenant trois pales; et dans lequel le procédé comprend:
dégivrage (10, 43, 53) d'une seule première pale parmi les trois pales;
tester (11, 46, 54) s'il existe un déséquilibre de masse dans le rotor après le dégivrage de seulement la première pale; et
dans le cas où un déséquilibre de masse est détecté, dégivrer toutes les autres pales du rotor, et dans le cas où un déséquilibre de masse n'est pas détecté,
reprendre le fonctionnement (12, 47, 55) de l'éolienne sans dégivrer les autres pales du rotor.

2. Procédé selon la revendication 1, comprenant en outre, avant le dégivrage de la seule première pale:
arrêter le fonctionnement de l'éolienne lorsque la présence éventuelle de glace sur les pales est détectée.

3. Procédé selon la revendication 2, dans lequel l'arrêt du fonctionnement se fait automatiquement en réponse à une détection de la présence éventuelle de glace sur les pales par un ou plusieurs capteurs.

4. Procédé selon la revendication 2, dans lequel l'arrêt du fonctionnement est déclenché par une commande manuelle.

5. Procédé selon l'une quelconque des revendications 1 - 4, dans lequel le test pour savoir s'il existe un déséquilibre de masse dans le rotor comprend :
en faisant tourner les pales à une vitesse prédéfinie ;
la mesure d'un paramètre indiquant un déséquilibre de masse ; et
comparer le paramètre mesuré avec une valeur du paramètre pour la même vitesse prédéfinie dans une condition dans laquelle il n'y a pas de déséquilibre de masse.

6. Procédé de la revendication 5, dans lequel le paramètre est l'oscillation latérale de la nacelle et/ou de la tour.

7. Procédé selon l'une quelconque des revendications 1 - 6, dans lequel le fait de tester s'il existe un déséquilibre de masse dans le rotor comprend le fait de positionner le rotor en position d'arrêt et de contester l'équilibre instable du rotor.

8. Une éolienne comprenant :
un rotor comprenant trois pales ;
une nacelle ;
une tour ;
un système de détection de glace ;
un système de dégivrage ; et
un système de contrôle configuré pour mettre en œuvre le procédé selon l'une quelconque des revendications 1 à 7.

9. L'éolienne de la revendication 8, comprenant en outre un système pour déterminer l'accélération latérale de la nacelle et/ou de la tour.

10. L'éolienne de la revendication 9, dans laquelle le système pour déterminer l'accélération latérale comprend un ou plusieurs accéléromètres.

11. L'éolienne de l'une quelconque des revendications 8 à 10, dans laquelle le système de détection de glace comprend un capteur de détection de glace placé sur la nacelle.

12. L'éolienne des revendications 8 à 11, dans laquelle le système de dégivrage comprend un ventilateur pour souffler de l'air dans les pales.
